(19) Europäisches Patentamt / European Patent Office / Office européen des brevets

(11) **EP 3 695 625 B1**

(12) **FASCICULE DE BREVET EUROPEEN**

(45) Date de publication et mention
de la délivrance du brevet:
**13.04.2022 Bulletin 2022/15**

(21) Numéro de dépôt: **18783028.6**

(22) Date de dépôt: **12.10.2018**

(51) Classification Internationale des Brevets (IPC):
*H04W 4/029* (2018.01)    *H04L 29/08* (2006.01)
*H04W 4/20* (2018.01)    *H04W 4/38* (2018.01)
*H04W 4/70* (2018.01)    *H04W 4/02* (2018.01)

(52) Classification Coopérative des Brevets (CPC):
**H04W 4/029;** H04L 67/32; H04W 4/027;
H04W 4/20; H04W 4/38; H04W 4/70

(86) Numéro de dépôt international:
**PCT/EP2018/077854**

(87) Numéro de publication internationale:
**WO 2019/073026 (18.04.2019 Gazette 2019/16)**

(54) **PROCÉDÉ, TERMINAL, SYSTÈME ET LOGICIEL DE NOTIFICATION D'INFORMATIONS DÉTERMINÉES PAR UN TERMINAL À DESTINATION D'UN RÉSEAU D'ACCÈS D'UN SYSTÈME DE COMMUNICATION SANS FIL**

VERFAHREN, TERMINAL, SYSTEM UND SOFTWARE ZUR MELDUNG VON INFORMATIONEN, DIE VON EINEM ENDGERÄT BESTIMMT WERDEN, DAS FÜR EIN ZUGANGSNETZWERK EINES DRAHTLOSKOMMUNIKATIONSSYSTEMS BESTIMMT IST

METHOD, TERMINAL, SYSTEM AND SOFTWARE OF NOTIFICATION OF INFORMATION DETERMINED BY A TERMINAL DESTINED FOR AN ACCESS NETWORK OF A WIRELESS COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2017 FR 1759580**

(43) Date de publication de la demande:
**19.08.2020 Bulletin 2020/34**

(73) Titulaire: **Sigfox**
**31670 Labege (FR)**

(72) Inventeurs:
• **ISSON, Olivier**
**31650 Lauzerville (FR)**
• **MARTY, Renaud**
**31520 Ramonville Saint Agne (FR)**

(74) Mandataire: **Ipside**
**6, Impasse Michel Labrousse**
**31100 Toulouse (FR)**

(56) Documents cités:
**US-A1- 2016 105 764**

• **HIGUCHI TAKAMASA ET AL: "Mobile Node Localization Focusing on Stop-and-Go Behavior of Indoor Pedestrians", IEEE TRANSACTIONS ON MOBILE COMPUTING, IEEE SERVICE CENTER, LOS ALAMITOS, CA, US, vol. 13, no. 7, 1 juillet 2014 (2014-07-01), pages 1564-1578, XP011552474, ISSN: 1536-1233, DOI: 10.1109/TMC.2013.139 [extrait le 2014-06-27]**

## Description

### DOMAINE TECHNIQUE

La présente invention appartient au domaine des systèmes de communication sans fil, et concerne plus particulièrement un procédé de notification, par un terminal, d'informations déterminées par ledit terminal à destination d'un réseau d'accès d'un système de communication sans fil.

La présente invention trouve une application particulièrement avantageuse, bien que nullement limitative, pour des applications du type M2M (acronyme anglo-saxon pour « Machine-to-Machine ») ou du type « Internet des objets » (« Internet of Things » ou IoT dans la littérature anglo-saxonne).

### ÉTAT DE LA TECHNIQUE

Dans le contexte par exemple de l'IoT, chaque objet de la vie de tous les jours a vocation à devenir un objet communicant, et est à cet effet équipé d'un terminal adapté à émettre des données à destination d'un réseau d'accès d'un système de communication sans fil.

Dans un tel contexte, il est important de disposer de solutions qui soient à la fois faible coût (donc faible complexité) et en même temps faiblement consommatrices en énergie électrique. Ceci permet par exemple de rendre communicants beaucoup d'objets de la vie de tous les jours sans impacter leur coût de production de façon significative, et surtout sans trop impacter leur autonomie lorsqu'ils sont opérés sur batterie.

Pour des objets mobiles, notamment, il est souhaité pouvoir recevoir de manière récurrente, au niveau du réseau d'accès, des informations fournies par ces objets. Ces informations peuvent être des informations déterminées à partir de mesures effectuées par des capteurs du terminal équipant un objet.

Toutefois, l'ajout de tels capteurs, ainsi que l'émission des mesures fournies par ces capteurs, augmentent la consommation électrique de l'objet, surtout en cas d'émissions trop fréquentes, ce qui peut s'avérer problématique surtout pour des objets opérés sur batterie. En outre, les terminaux équipant de tels objets présentent généralement un débit limité, qui peut s'avérer insuffisant si un trop grand nombre de mesures doivent être émises. Le document US2016/105764 A1 décrit une sélection des informations sur l'emplacement en fonction du mouvement détecté. Le document de HIGUCHI TAKAMASA ET AL décrit une localisation des nœuds mobiles axée sur le comportement stop-and-go des piétons à l'intérieur, "Mobile Node Localization Focusing on Stop-and-Go Behavior of Indoor Pedestrians",dans la revue IEEE TRANSACTIONS ON MOBILE COMPUTING, LOS ALAMITOS, vol. 13, no. 7, 1 juillet 2014, pages 1564-1578, XP011552474.

### EXPOSÉ DE L'INVENTION

La présente invention a pour objectif de remédier à tout ou partie des limitations des solutions de l'art antérieur, notamment celles exposées ci-avant, en proposant une solution qui permette de limiter la consommation électrique associée à l'utilisation de certains capteurs du terminal et à l'émission des informations déterminées par ledit terminal.

En outre, la présente invention a également pour objectif de proposer une solution qui permette de limiter, au moins dans certains modes de mise en œuvre, la quantité de données nécessaire pour émettre les informations déterminées par ledit terminal.

A cet effet, et selon un premier aspect, l'invention concerne un procédé de notification, par un terminal, d'informations déterminées par ledit terminal à destination d'un réseau d'accès d'un système de communication sans fil. Ledit terminal comportant un capteur de mouvement adapté à fournir des mesures représentatives du mouvement dudit terminal, ledit procédé comporte :

- une évaluation, en fonction des mesures fournies par le capteur de mouvement, d'un critère prédéterminé de détection de mouvement et, lorsque le critère de détection de mouvement est vérifié : un horodatage du mouvement détecté par mémorisation d'un instant de détection du mouvement détecté,
- une détermination, en fonction des instants de détection, d'instants de début et d'instants de fin respectifs de phases de mobilité du terminal en identifiant des instants de détection qui appartiennent à une même phase de mobilité et des instants de détection qui appartiennent à des phases de mobilité différentes,
- une détermination d'informations par le terminal en fonction des instants de début et des instants de fin respectifs de phases de mobilité dudit terminal,
- une formation d'un message de notification comportant les informations déterminées,
- une émission, par le terminal, du message de notification à destination du réseau d'accès.

Ainsi, le capteur de mouvement du terminal est mis en œuvre principalement pour identifier les phases de mobilité du terminal. Par « phase de mobilité » on entend un intervalle de temps pendant lequel le terminal est considéré comme étant en train de se déplacer. Deux phases de mobilité successives sont séparées par une phase d'immobilité, qui correspond à un intervalle de temps pendant lequel le terminal est considéré comme étant immobile. Pour identifier de telles phases de mobilité, il n'est pas nécessaire d'utiliser le capteur de mouvement de manière continue, de sorte que son utilisation peut être optimisée pour réduire la consommation électrique du terminal. Par exemple, le capteur de mouvement peut être placé par défaut en mode veille, et être réveillé de manière périodique avec une période choisie de sorte à assurer la précision recherchée pour la détermination des instants de début et des instants de fin des phases de mobilité.

Les informations à émettre sont ensuite déterminées en fonction des instants de début et des instants de fin de phases de mobilité, c'est-à-dire en tenant compte des phases de mobilité (et donc également des phases d'immobilité) dudit terminal.

Notamment, si les informations sont déterminées en fonction de mesures effectuées par un capteur du terminal, alors il est possible de commander le capteur de sorte à effectuer les mesures en tenant compte des phases de mobilité du terminal. Par exemple, si la mesure correspond à une mesure GPS (« Global Positioning System ») réalisée par un capteur de position, et si aucune phase de mobilité n'a été détectée depuis la dernière mesure GPS effectuée, alors il n'est pas nécessaire d'effectuer à nouveau une mesure GPS, puisque le terminal n'a en principe pas bougé depuis la dernière mesure GPS. Si par contre, un instant de fin de phase de mobilité est détecté, alors il peut s'avérer pertinent d'effectuer une nouvelle mesure GPS pour mesurer la position dudit terminal à la fin de la dernière phase de mobilité. La consommation électrique du capteur de position peut donc être réduite tout en s'assurant de la pertinence des mesures GPS effectuées.

Dans des modes particuliers de mise en œuvre, le procédé de notification peut comporter en outre l'une ou plusieurs des caractéristiques suivantes, prises isolément ou selon toutes les combinaisons techniquement possibles.

Dans des modes particuliers de mise en œuvre, la détermination d'instant de début et d'instants de fin de phases de mobilité comporte une identification des instants de détection qui appartiennent à une même phase de mobilité et des instants de détection qui appartiennent à des phases de mobilité différentes de sorte à identifier, parmi les instants de détection, ceux qui correspondent à des instants de début de phases de mobilité et ceux qui correspondent à des instants de fin de phases de mobilité.

Dans des modes particuliers de mise en œuvre, les informations incluses dans le message de notification correspondent aux instants de début et aux instants de fin respectifs de phases de mobilité du terminal.

Ainsi, les informations à émettre sont dans ce cas des informations de mouvement du terminal. Le message de notification peut comporter les instants de début et les instants de fin respectifs d'une pluralité de phases de mobilité, et la détermination desdites informations de mouvement revient principalement à identifier les instants de début et les instants de fin qui doivent être inclus dans le message de notification qui sera émis à destination du réseau d'accès. En d'autres termes, il n'est pas nécessaire d'émettre un message de notification à chaque fois qu'une phase de mobilité est détectée. Il est donc possible de placer un module de communication sans fil du terminal en mode veille pendant des durées prolongées, en limitant le nombre de réveils pour émettre les messages de notification, réduisant ainsi la consommation électrique dudit module de communication sans fil et du terminal.

En outre, les informations de mouvement peuvent être réduites aux instants de début et aux instants de fin respectifs des phases de mobilité du terminal, ce qui représente une quantité de données très inférieure à la quantité de données représentée par les mesures fournies par le capteur de mouvement et utilisées pour déterminer les phases de mobilité. De telles informations de mouvement sont par conséquent adaptées pour des systèmes de communication sans fil présentant un débit limité.

Dans des modes particuliers de mise en œuvre, au cours de la formation du message de notification, les instants de début et les instants de fin sont encodés sous la forme d'écarts temporels par rapport à un instant de référence, l'instant de référence n'étant pas inclus dans le message de notification formé par le terminal.

De telles dispositions permettent de réduire davantage la quantité de données nécessaires pour émettre les informations de mouvement du terminal, puisque celles-ci correspondent à des instants de début et des instants de fin « relatifs », définis par rapport à l'instant de référence qui n'est pas inclus dans le message de notification. Par conséquent, le réseau d'accès doit pouvoir déterminer l'instant de référence pour retrouver des instants de début et des instants de fin « absolus » des phases de mobilité du terminal à partir des informations de mouvement incluses dans le message de notification reçu.

Dans des modes particuliers de mise en œuvre, l'instant de référence est l'instant d'émission du message de notification.

De telles dispositions sont avantageuses en ce qu'il est alors simple pour le réseau d'accès de déterminer l'instant de référence. En effet, l'instant de réception, par le réseau d'accès, du message de notification émis par le terminal peut être utilisé comme instant de référence pour retrouver les instants de début et les instants de fin « absolus » des phases de mobilité.

Dans des modes particuliers de mise en œuvre, la détermination d'informations par le terminal comporte, lorsqu'un instant de fin et/ou un instant de début d'une phase de mobilité est détecté, une mesure par un autre capteur dudit terminal, distinct du capteur de mouvement. Les informations déterminées et incluses dans le message de notification sont représentatives de la mesure effectuée par ledit autre capteur. Par exemple, ledit autre capteur est un capteur adapté à mesurer l'une au moins des grandeurs physiques suivantes :

- la position du terminal,
- la température,
- la pression atmosphérique,
- la luminosité,
- le champ magnétique, etc.

Ainsi, les informations incluses dans le message de notification correspondent à une mesure réalisée par un autre capteur dudit terminal. Toutefois, la mesure est effectuée de préférence uniquement lorsqu'un instant de fin (et/ou un instant de début) de phase de mobilité a été détecté. D'une part, cela permet de réduire la consommation électrique de cet autre capteur qui peut être placé par défaut en mode veille, et être réveillé uniquement lorsqu'une mesure doit être effectuée. D'autre part, les informations représentent une quantité de données très inférieure à la quantité de données représentée par des mesures effectuées de manière périodique ou à chaque fois que le critère de détection est vérifié. De telles informations sont néanmoins très utiles puisqu'elles sont représentatives de l'environnement atteint par le terminal à la fin de chaque une phase de mobilité.

Dans des modes particuliers de mise en œuvre, la détermination d'instants de début et d'instants de fin respectifs de phases de mobilité comporte :

- une mémorisation dans une table d'historique de l'instant de détection de chaque mouvement détecté, ladite table d'historique comportant un nombre $n_{mem}$ prédéterminé d'instants de détection respectifs de mouvements précédemment détectés,
- lorsque le critère de détection de mouvement est vérifié de sorte qu'un nouveau mouvement est détecté : une évaluation d'un critère prédéterminé de détection de nouvelle phase de mobilité par comparaison de l'instant de détection du nouveau mouvement détecté avec les instants de détection mémorisés dans la table d'historique,
- lorsque le critère de détection de nouvelle phase de mobilité est vérifié : une mémorisation de l'instant de détection du nouveau mouvement détecté comme instant de début de la nouvelle phase de mobilité et de l'instant de détection le plus récent mémorisé dans la table d'historique comme instant de fin de la phase de mobilité précédente.

Dans des modes particuliers de mise en œuvre, le critère de détection de nouvelle phase de mobilité est vérifié lorsque l'expression suivante est vérifiée :

$$td - \sum_{i=1}^{n_{mem}} a_i \cdot td_i > V0$$

expression dans laquelle :

- $td$ correspond à l'instant de détection du nouveau mouvement détecté,
- $td_i$ correspond à l'instant de détection de rang $i$ ($1 \le i \le n_{mem}$) mémorisé dans la table d'historique,
- $a_i$ correspond à un coefficient de pondération de l'instant de détection de rang $i$ ($1 \le i \le n_{mem}$),
- $V0$ correspond à une valeur seuil prédéterminée.

Dans des modes particuliers de mise en œuvre, les mesures fournies par le capteur de mouvement étant représentatives d'accélérations $\alpha_x$, $\alpha_y$ et $\alpha_z$ du terminal suivant trois axes, le critère de détection de mouvement est vérifié lorsque l'expression suivante est vérifiée :

$$N\{a_x, a_y, a_z\} > V1$$

expression dans laquelle :

- $N\{\alpha_x, \alpha_y, \alpha_z\}$ correspond à une norme d'un vecteur d'accélération formé par les accélérations $\alpha_x$, $\alpha_y$ et $\alpha_z$,
- $V1$ correspond à une valeur seuil prédéterminée.

Dans des modes particuliers de mise en œuvre, les mesures fournies par le capteur de mouvement étant représentatives d'accélérations $\alpha_x$, $\alpha_y$ et $\alpha_z$ du terminal suivant trois axes, le critère de détection de mouvement est vérifié lorsque l'expression suivante est vérifiée :

$$N\{|\Delta a_x|, |\Delta a_y|, |\Delta a_z|\} > V2$$

expression dans laquelle :

- $|\Delta \alpha_x|$, $|\Delta \alpha_y|$ et $|\Delta \alpha_z|$ correspondent aux variations respectives des accélérations $\alpha_x$, $\alpha_y$ et $\alpha_z$,
- $N\{|\Delta \alpha_x|, |\Delta \alpha_y|, |\Delta \alpha_z|\}$ correspond à une norme d'un vecteur de variation d'accélération formé par les variations d'accélération $|\Delta \alpha_x|$, $|\Delta \alpha_y|$ et $|\Delta \alpha_z|$,
- $V2$ correspond à une valeur seuil prédéterminée.

Selon un second aspect, l'invention concerne un produit programme d'ordinateur comportant un ensemble d'instructions de code de programme qui, lorsqu'elles sont exécutées par un processeur, configurent ledit processeur pour mettre en œuvre un procédé de notification selon l'un quelconque des modes de mise en œuvre de l'invention.

Selon un troisième aspect, l'invention concerne un terminal comportant un capteur de mouvement, un module de communication sans fil adapté à échanger des données avec un réseau d'accès d'un système de communication sans fil, et un circuit de traitement configuré pour mettre en œuvre les étapes d'un procédé de notification selon l'un quelconque des modes de mise en œuvre de l'invention.

Selon un quatrième aspect, l'invention concerne un système de communication sans fil comportant un réseau d'accès et une pluralité de terminaux selon l'un quelconque des modes de réalisation de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de communication sans fil,
- Figure 2: une représentation schématique d'un exemple de réalisation d'un terminal pouvant équiper un objet communicant,
- Figure 3 : un diagramme fonctionnel illustrant les principales étapes d'un procédé de notification d'informations déterminées par le terminal à destination d'un réseau d'accès,
- Figure 4 : un diagramme fonctionnel illustrant un mode préféré de mise en œuvre d'une détermination d'instants de début et d'instants de fin respectifs de phases de mobilité du terminal.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

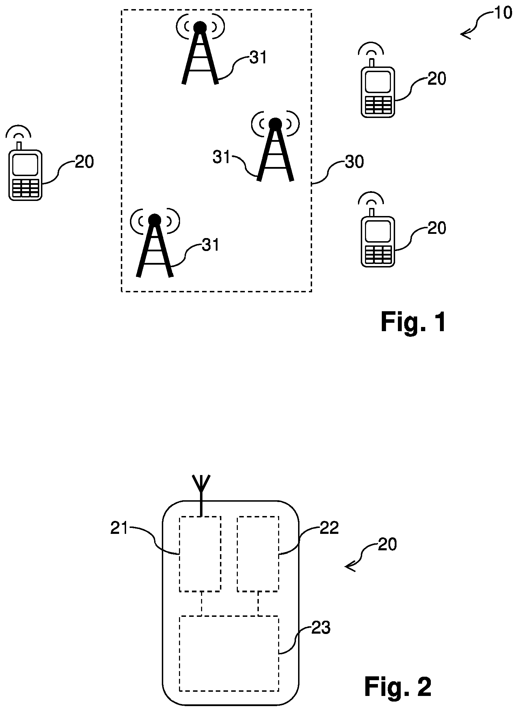

La figure 1 représente schématiquement un système 10 de communication sans fil, comportant des terminaux 20 et un réseau d'accès 30 comportant par exemple une pluralité de stations de base 31.

Les terminaux 20 et les stations de base 31 échangent des données sous la forme de signaux radioélectriques. Par « signal radioélectrique », on entend une onde électromagnétique se propageant en espace libre, dont les fréquences sont comprises dans le spectre traditionnel des ondes radioélectriques (quelques hertz à plusieurs centaines de gigahertz).

Les échanges de données entre un terminal 20 et les stations de base 31 sont par exemple bidirectionnels. En d'autres termes, le terminal 20 est adapté à émettre des données sur un lien montant à destination des stations de base 31, et à recevoir des données sur un lien descendant depuis lesdites stations de base 31 vers ledit terminal 20.

Rien n'exclut cependant, suivant d'autres exemples, d'avoir des échanges unidirectionnels, uniquement sur le lien montant. De nombreuses applications du type IoT consistent en de la collecte de données émises par des terminaux 20, et s'accommodent parfaitement d'échanges uniquement sur le lien montant entre chaque terminal 20 et les stations de base 31.

Suivant un exemple non limitatif, le système 10 de communication sans fil est à bande ultra étroite. Par « bande ultra étroite » (« Ultra Narrow Band » ou UNB dans la littérature anglo-saxonne), on entend que le spectre fréquentiel instantané des signaux émis par les terminaux 20 est de largeur fréquentielle inférieure à deux kilohertz, voire inférieure à un kilohertz. De telles dispositions sont particulièrement avantageuses en ce que l'émission de tels signaux peut être réalisée avec une consommation électrique très réduite, particulièrement adaptée pour des applications du type IoT.

La figure 2 représente schématiquement un exemple de réalisation d'un terminal 20.

Tel qu'illustré par la figure 2, le terminal 20 comporte un module 21 de communication sans fil adapté à échanger des données avec les stations de base 31 du réseau d'accès 30. Le module 21 de communication sans fil se présente par exemple sous la forme d'un circuit électrique comportant des équipements (antenne, amplificateur, oscillateur local, mélangeur, filtre analogique, etc.) connus de l'homme du métier.

Le terminal 20 comporte également un capteur 22 de mouvement, adapté à fournir des mesures représentatives du mouvement dudit terminal 20. Par exemple, le capteur 22 de mouvement est un accéléromètre adapté à fournir des mesures de l'accélération $\alpha_x$, $\alpha_y$ et $\alpha_z$ du terminal 20 suivant trois axes de préférence orthogonaux. Rien n'exclut cependant, suivant d'autres exemples, de considérer d'autres types de capteurs de mouvement (gyroscope, capteur d'inclinaison, boussole, etc.) et/ou un capteur de mouvement adapté à mesurer le mouvement du terminal 20 suivant un nombre d'axes différent de trois.

En outre, le terminal 20 comporte également un circuit 23 de traitement, relié au module 21 de communication sans fil et au capteur 22 de mouvement. Le circuit 23 de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les étapes d'un procédé 50 de notification décrit ci-après. Alternativement ou en complément, le circuit 23 de traitement comporte un ou des circuits logiques programmables (FPGA, PLD, etc.), et/ou un ou des circuits intégrés spécialisés (ASIC, etc.), et/ou un ensemble de composants électroniques discrets, etc., adaptés à mettre en œuvre tout ou partie desdites étapes du procédé 50 de notification.

En d'autres termes, le circuit 23 de traitement comporte un ensemble de moyens configurés de façon logicielle (produit programme d'ordinateur spécifique) et/ou matérielle (FPGA, PLD, ASIC, composants électroniques discrets, etc.) pour mettre en œuvre, en collaboration avec le module 21 de communication sans fil et le capteur 22 de mouvement, les étapes du procédé 50 de notification décrit ci-après.

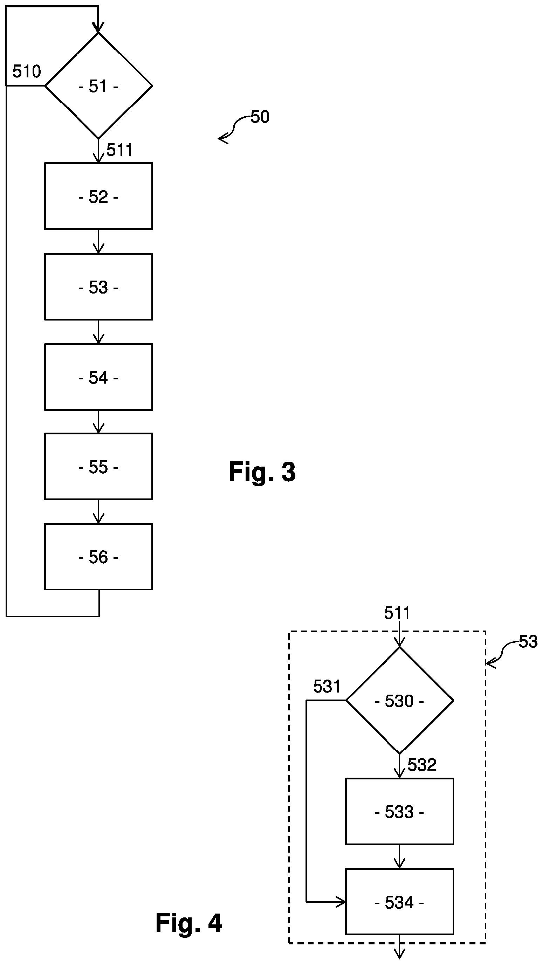

La figure 3 représente les principales étapes, mises en œuvre par le terminal 20, d'un procédé 50 de notification d'informations déterminées par le terminal 20 à destination du réseau d'accès 30, lesquelles sont :

- 51 évaluation, en fonction des mesures fournies par le capteur 22 de mouvement, d'un critère prédéterminé de détection de mouvement et, lorsque le critère de détection de mouvement est vérifié : 52 horodatage du mouvement détecté par mémorisation d'un instant de détection du mouvement détecté,

- 53 détermination, en fonction des instants de détection, d'instants de début et d'instants de fin respectifs de phases de mobilité du terminal 20 en identifiant des instants de détection qui appartiennent à une même phase de mobilité et des instants de détection qui appartiennent à des phases de mobilité différentes,
- 54 détermination d'informations par le terminal 20 en fonction des instants de début et des instants de fin respectifs de phases de mobilité dudit terminal,
- 55 formation d'un message de notification comportant les informations déterminées,
- 56 émission du message de notification à destination du réseau d'accès 30.

Il est à noter que l'ordre des différentes étapes représentées sur la figure 3 est donné à titre illustratif uniquement, à des fins de clarté de la figure, et ne saurait être considéré comme limitatif de l'invention.

Dans la suite de description, on se place de manière non limitative dans le cas où les informations à émettre, déterminées par le terminal 20, sont des informations de mouvement dudit terminal 20.

L'étape 51 d'évaluation du critère de détection de mouvement est par exemple exécutée par le circuit 23 de traitement, en fonction des mesures fournies par le capteur 22 de mouvement.

Alternativement, et de préférence, l'étape 51 d'évaluation du critère de détection de mouvement est exécutée par le capteur 22 de mouvement. L'évaluation du critère de détection de mouvement peut alors être effectuée sans intervention du circuit 23 de traitement. Par conséquent, le circuit 23 de traitement peut être placé en mode veille, et être réveillé par une interruption générée par le capteur 22 de mouvement lorsque le critère de détection de mouvement est vérifié. De telles dispositions sont donc particulièrement avantageuses d'un point de vue consommation électrique du terminal 20.

Dans la suite de la description, on considère de manière non limitative le cas où l'étape 51 d'évaluation du critère de détection de mouvement est exécutée par le capteur 22 de mouvement, et où le circuit 23 de traitement est par défaut en mode veille.

L'étape 51 d'évaluation du critère de détection de mouvement est par exemple exécutée de manière récurrente. Par exemple, le capteur 22 de mouvement effectue une mesure du mouvement du terminal 20 de manière périodique avec une période $T_m$ (par exemple comprise entre quelques dizaines de millisecondes et quelques centaines de millisecondes), et évalue en fonction de cette mesure le critère de détection de mouvement. Dans un tel cas, il est possible de placer le capteur 22 de mouvement en mode veille par défaut, le capteur 22 de mouvement étant alors configuré pour se réveiller toutes les $T_m$ secondes pour mesurer le mouvement et évaluer le critère de détection de mouvement. De telles dispositions sont avantageuses en ce qu'elles permettent de réduire davantage la consommation électrique du terminal 20.

De manière générale, tout type de critère de détection de mouvement peut être évalué, dès lors qu'il permet de déterminer si le terminal 20 est en train de se déplacer ou s'il est au contraire immobile. Le choix d'un critère de détection de mouvement particulier ne constitue qu'une variante d'implémentation de l'invention.

Des exemples de critères de détection de mouvement possibles sont donnés ci-après, en considérant de manière non limitative le cas où le capteur 22 de mouvement est un accéléromètre qui fournit des mesures représentatives des accélérations $a_x$, $a_y$ et $a_z$ du terminal 20 suivant trois axes. Il est à noter qu'il est également possible de considérer plusieurs des critères de détection ci-dessous, qui doivent par exemple tous être considérés comme vérifiés pour conclure à la détection d'un mouvement du terminal 20.

De manière générale, le critère de détection de mouvement peut être considéré comme vérifié lorsque l'expression suivante est vérifiée :

$$N\{a_x, a_y, a_z\} > V1$$

expression dans laquelle $V1$ correspond à une valeur seuil positive prédéterminée.

Suivant un premier exemple, la norme considérée est la norme infinie, et le critère de détection de mouvement peut être considéré comme vérifié lorsque l'expression suivante est vérifiée :

$$max\{|a_x|, |a_y|, |a_z|\} > V1$$

Par exemple, la valeur seuil $V1$ est dans ce cas comprise entre $1 \cdot g$ et $1.5 \cdot g$ ($g$ étant l'accélération de la pesanteur à la surface de la Terre, approximativement égale à 9.81 m/s²), par exemple égale à $1.3 \cdot g$.

Alternativement ou en complément, la norme considérée est la norme un, et le critère de détection de mouvement peut être considéré comme vérifié lorsque l'expression suivante est vérifiée :

$$|a_x| + |a_y| + |a_z| > V1$$

Par exemple, la valeur seuil $V1$ est dans ce cas comprise entre $0.8 \cdot g$ et $1.2 \cdot g$, par exemple égale à $0.95 \cdot g$.

Alternativement ou en complément, la norme considérée est la norme deux, et le critère de détection de mouvement peut être considéré comme vérifié lorsque l'expression suivante est vérifiée :

$$\sqrt{a_x^2 + a_y^2 + a_z^2} > V1$$

Alternativement ou en complément, le critère de détection de mouvement peut être considéré comme vérifié lorsque l'expression suivante est vérifiée :

$$N\{|\Delta a_x|, |\Delta a_y|, |\Delta a_z|\} > V2$$

expression dans laquelle :

- $|\Delta\alpha_x|$, $|\Delta\alpha_y|$ et $|\Delta\alpha_z|$ correspondent aux variations respectives des accélérations $\alpha_x$, $\alpha_y$ et $\alpha_z$ sur une période prédéterminée, par exemple comprise entre quelques dizaines de millisecondes et quelques centaines de millisecondes,
- $V2$ correspond à une valeur seuil positive prédéterminée.

Comme précédemment, la norme considérée peut être la norme infinie, la norme un, la norme deux, etc. Dans le cas où la norme considérée est la norme infinie, la valeur seuil $V2$ est par exemple comprise entre $0.1 \cdot g$ et $0.4 \cdot g$, par exemple égale à $0.27 \cdot g$.

Lorsque le critère de détection de mouvement n'est pas vérifié (référence 510 sur la figure 3), c'est-à-dire lorsqu'il est considéré d'après les mesures que le terminal 20 n'est pas en train de se déplacer, le capteur 22 de mouvement retourne par exemple en mode veille pendant $T_m$ secondes.

Lorsque le critère de détection de mouvement est vérifié (référence 511 sur la figure 3), c'est-à-dire lorsqu'il est considéré d'après les mesures que le terminal 20 est en train de se déplacer, le capteur 22 de mouvement génère par exemple une interruption visant à réveiller le circuit 23 de traitement si celui-ci est en mode veille. Le circuit 23 de traitement horodate (étape 52 du procédé 50 de notification) ensuite le mouvement détecté en mémorisant l'instant de détection dudit mouvement détecté.

Tel qu'illustré par la figure 3, le procédé 50 de notification comporte également une étape 53 de détermination, parmi les instants de détection mémorisés, desdits instants de détection qui correspondent à des instants de début et à des instants de fin de phases de mobilité du terminal 20. L'étape 53 de détermination est par exemple exécutée, par le circuit 23 de traitement, à chaque fois que le critère de détection de mouvement est vérifié.

Tel qu'indiqué précédemment, on entend par « phase de mobilité » un intervalle de temps pendant lequel le terminal est considéré comme étant en train de se déplacer. Deux phases de mobilité successives sont séparées par une phase d'immobilité, qui correspond à un intervalle de temps pendant lequel le terminal est considéré comme étant immobile.

En effet, le critère de détection de mouvement permet de déterminer si le terminal 20 est un train de se déplacer à un instant donné, ou s'il est au contraire immobile. Les instants de détection mémorisés des mouvements détectés appartiennent à priori à des phases de mobilité du terminal 20, mais il n'est à ce stade pas connu si deux instants de détection successifs appartiennent à la même phase de mobilité ou à des phases de mobilité différentes (auquel cas ils sont séparés par une phase d'immobilité). Par conséquent, l'étape 53 de détermination vise à identifier les instants de détection qui appartiennent à une même phase de mobilité et les instants de détection qui, a contrario, appartiennent à des phases de mobilité différentes pour, in fine, déterminer les instants de début et les instants de fin respectifs des phases de mobilité. En outre, cela permet de réduire la quantité de données mémorisées puisque cela permet de ne mémoriser, pour chaque phase de mobilité, que deux instants de détection (correspondant à l'instant de début et à l'instant de fin) alors qu'une phase de mobilité peut comporter de nombreux instants de détection si sa durée est très supérieure à la période $T_m$. En d'autres termes, après avoir identifié les instants de détection qui correspondent à un instant de début et à un instant de fin d'une même phase de mobilité, il n'est alors plus nécessaire de conserver en mémoire les instants de détection qui se trouvent entre ledit instant de début et ledit instant de fin.

De manière générale, toute méthode de détermination des instants de début et des instants de fin respectifs des phases de mobilité en fonction des instants de détection peut être mise en œuvre. Le choix d'une méthode particulière ne constitue qu'une variante d'implémentation de l'invention.

La figure 4 représente schématiquement un mode préféré de mise en œuvre de l'étape 53 de détermination. Il est à noter que l'ordre des différentes étapes représentées sur la figure 4 est donné à titre illustratif uniquement, à des fins de clarté de la figure, et n'est pas limitatif de l'invention.

Tel qu'illustré par la figure 4, le procédé 50 de notification comporte une étape 534 de mémorisation dans une table d'historique de l'instant de détection de chaque mouvement détecté. La table d'historique comporte un nombre $n_{mem}$ prédéterminé d'instants de détection, qui correspondent aux derniers mouvements précédemment détectés. La table d'historique se présente par exemple sous la forme d'un vecteur T :

$$T = \left[td_1, td_2, ..., td_{n_{mem}}\right]$$

expression dans laquelle $td_i$ correspond à l'instant de détection de rang $i$ ($1 \le i \le n_{mem}$), $td_{n_{mem}}$ étant par convention l'instant de détection le plus ancien et $td_1$ l'instant de détection le plus récent. Par exemple, à la mise en service du terminal 20, la table d'historique est initialisée à un vecteur nul, et l'instant de détection du premier mouvement détecté correspond à un instant de début de phase de mobilité. Le nombre $n_{mem}$ peut dépendre de l'application envisagée, et est par exemple compris entre 2 et 10, par exemple égal à 4.

Tel qu'illustré par la figure 4, lorsque le critère de détection de mouvement est vérifié (référence 511 sur la figure 4), de sorte qu'un nouveau mouvement est détecté et horodaté (instant de détection $td$), l'étape 53 de détermination comporte une étape 530 d'évaluation d'un critère prédéterminé de détection de nouvelle phase de mobilité par comparaison de l'instant de détection du nouveau mouvement détecté avec les instants de détection mémorisés dans la table d'historique.

De manière générale, tout type de critère de détection de nouvelle phase de mobilité peut être évalué, dès lors qu'il permet de déterminer si l'instant de détection du nouveau mouvement détecté correspond à une nouvelle phase de mobilité, c'est-à-dire à une phase de mobilité différente de celle des instants de détection mémorisés dans la table d'historique. Le choix d'un critère de détection de nouvelle phase de mobilité particulier ne constitue qu'une variante d'implémentation de l'invention.

Dans des modes préférés de mise en œuvre, le critère de détection de nouvelle phase de mobilité peut être considéré comme vérifié lorsque l'expression suivante est vérifiée :

$$td - \sum_{i=1}^{n_{mem}} a_i \cdot td_i > V0$$

expression dans laquelle :

- $td$ correspond à l'instant de détection du nouveau mouvement détecté,
- $\alpha_i$ correspond à un coefficient de pondération de l'instant de détection de rang $i$ ($1 \le i \le n_{mem}$),
- $V0$ correspond à une valeur seuil positive prédéterminée.

Les coefficients $\alpha_i$ ($1 \le i \le n_{mem}$) peuvent prendre toute forme adaptée. Par exemple, les coefficients $\alpha_i$ peuvent croître progressivement à partir du coefficient $\alpha_1$ jusqu'à atteindre une valeur maximale et décroître progressivement jusqu'au coefficient $\alpha_{n_{mem}}$. Il est également possible de considérer des coefficients $\alpha_i$ tous égaux entre eux, par exemple en considérant l'expression suivante :

$$td - \frac{\sum_{i=1}^{n_{mem}} td_i}{n_{mem}} > V0$$

De manière plus générale, il est possible de considérer tout type de filtrage temporel des instants de détection $td_i$ ($1 \le i \le n_{mem}$). Le filtrage temporel peut être linéaire (comme dans les expressions précédentes) ou non-linéaire (par exemple pour donner en sortie une valeur médiane desdits instants de détection $td_i$, qui est comparée à l'instant de détection $td$).

La valeur $V0$ dépend de l'application envisagée et peut être choisie pour ignorer les phases d'immobilité de courte durée, par exemple de durée inférieure à une quinzaine de minutes. En d'autres termes, la valeur $V0$ peut être choisie pour faire en sorte que deux phases de mobilité séparées par une phase d'immobilité de courte durée soient détectées comme étant une seule et même phase de mobilité du terminal 20. En outre, le choix de la valeur $V0$ peut également tenir compte d'une connaissance a priori d'une durée typique de phase de mobilité, la valeur $V0$ étant le cas échéant choisie inférieure à ladite durée typique. La valeur $V0$ est par exemple comprise entre 30 minutes et 120 minutes, par exemple égale à 45 minutes.

Lorsque le critère de détection de nouvelle phase de mobilité n'est pas vérifié (référence 531 sur la figure 4), c'est-à-dire lorsqu'il est considéré que l'instant de détection du nouveau mouvement détecté appartient à la même phase de mobilité que les instants de détection mémorisés dans la table d'historique, alors l'instant de détection $td$ est mémorisé (étape 534) dans la table d'historique en tant qu'instant de détection le plus récent, et l'instant de détection $td_{n_{mem}}$ le plus ancien est supprimé de ladite table d'historique.

Lorsque le critère de détection de nouvelle phase de mobilité est vérifié (référence 532 sur la figure 4), c'est-à-dire lorsqu'il est considéré que l'instant de détection du nouveau mouvement détecté appartient à une phase de mobilité différente de celle des instants de détection mémorisés dans la table d'historique, alors le procédé 50 de notification comporte une étape 533 de mémorisation de l'instant de détection $td$ du nouveau mouvement détecté comme instant de début de la nouvelle phase de mobilité et de l'instant de détection $td_1$ le plus récent mémorisé dans la table d'historique comme instant de fin de la phase de mobilité précédente. Ensuite, l'instant de détection $td$ est mémorisé (étape 534) dans la table d'historique. De préférence, l'instant de détection $td$ remplace alors tous les instants de détection mémorisés dans la table d'historique, de sorte que celle-ci devient :

$$T = [td, td, ..., td]$$

Tel qu'illustré par la figure 3, le procédé 50 de notification comporte également une étape 54 détermination des informations de mouvement en fonction des instants de début et des instants de fin respectifs des phases de mobilité détectées du terminal 20. Dans la suite de la description, on se place de manière non limitative dans le cas où les informations de mouvement considérées sont représentatives des instants de début et des instants de fin respectifs des phases de mobilité détectées dudit terminal 20.

En pratique, la connaissance des phases de mobilité d'un terminal 20 (et donc également de ses phases d'immobilité), et de l'objet auquel ledit terminal 20 est lié, trouve de nombreuses applications. Par exemple, si des objets sont censés se déplacer ensemble, alors il est possible en comparant les phases de mobilité de ces objets de détecter si l'un de ces objets ne se déplace plus avec les autres, ce qui correspond alors à une anomalie.

Suivant un autre exemple très concret d'application, dans le cas d'objets correspondant à des camions, alors il est possible à partir de instants de début et des instants de fin des phases de mobilité, de déterminer les durées des pauses de ces camions, afin par exemple de s'assurer que ces durées de pause sont conformes aux durées de pause réglementaires.

Tel qu'illustré par la figure 3, le procédé 50 de notification comporte également une étape 55 de formation d'un message de notification comportant les informations de mouvement du terminal 20.

L'étape 55 de formation du message de notification, par exemple exécutée par le circuit 23 de traitement, est par exemple exécutée de manière récurrente. Par exemple, l'étape 55 de formation est exécutée lorsqu'un nombre prédéterminé de phases de mobilité a été détecté depuis la formation du message de notification précédent. Suivant un autre exemple, l'étape 55 de formation est exécutée de manière périodique, avec une période *Tf* supérieure à la période *Tm,* voire significativement supérieure à *Tm.* La période *Tf* est par exemple de l'ordre de quelques heures, par exemple égale à 6 heures.

Lorsque l'étape 55 de formation du message de notification est exécutée, il est possible de déterminer si, à l'instant de formation *tf* dudit message de formation, une phase de mobilité précédemment en cours peut être considérée comme terminée. Cela revient par exemple à exécuter l'étape 53 de détermination d'instants de début et d'instants de fin des phases de mobilité du terminal 20 en remplaçant, dans les expressions précédentes, l'instant de détection *td* par l'instant de formation *tf.*

Tel qu'indiqué précédemment, les instants de début et les instants de fin respectifs des phases de mobilité représentent en principe une quantité de données inférieure à celle représentée par l'ensemble des instants de détection des mouvements détectés.

Dans des modes préférés de mise en œuvre permettant de réduire davantage la quantité de données à inclure dans le message de notification, les instants de début et les instants de fin sont encodés sous la forme d'écarts temporels par rapport à un instant de référence, et l'instant de référence n'est pas inclus dans le message de notification. En d'autres termes, les informations de mouvement incluses dans le message de notification correspondent à des instants de début et des instants de fin « relatifs » à un instant de référence, qui n'est pas transmis.

Par exemple, dans le cas d'une formation et d'une émission de message de notification toutes les 6 heures, et en considérant que les écarts temporels sont définis avec un pas de 100 secondes et que l'instant de référence est compris dans un intervalle temporel délimité par l'instant d'émission du précédent message de notification et l'instant d'émission prévu du message de notification en cours de formation, alors il est possible de coder toutes les valeurs possibles des écarts temporels (entre 0 et 6 heures) avec 8 bits. En effet, la valeur maximale pouvant alors être encodée est égale à 255·100 secondes, ce qui correspond approximativement à 7 heures. On comprend donc que les informations de mouvement peuvent être encodées avec une quantité de données très réduite.

L'instant de référence n'est pas transmis, et doit par conséquent pouvoir être déterminé par le réseau d'accès 30, pour permettre audit réseau d'accès 30 de recalculer, si nécessaire, des instants de début et des instants de fin « absolus ». De préférence, l'instant de référence est l'instant prévu d'émission du message de notification en cours de formation. En effet, l'instant de réception, par le réseau d'accès 30, du message de notification émis par le terminal 20 peut être utilisé comme instant de référence pour retrouver les instants de début et les instants de fin « absolus » des phases de mobilité.

Le procédé 50 de notification comporte alors une étape 56 d'émission, par le module 21 de communication sans fil, du message de notification à destination du réseau d'accès 30. Avantageusement, lorsque le terminal 20 n'émet pas de message de notification, le module 21 de communication sans fil peut être placé en mode veille afin de réduire la consommation électrique. Une fois le message de notification formé ou émis, la table d'historique est par exemple réinitialisée à un vecteur nul.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant de manière non limitative que les informations de mouvement du terminal 20 correspondent aux instants de début et aux instants de fin respectifs des phases de mobilité dudit terminal. Rien n'exclut, suivant d'autres exemples, de considérer alternativement ou en complément d'autres types d'informations de mouvement à inclure dans le message de notification. Suivant un exemple non limitatif, l'étape 54 de détermination d'informations de mouvement du terminal 20 peut comporter, lorsqu'un instant de fin (et/ou un instant de début) d'une phase de mobilité est détecté, une mesure de la position dudit terminal, les informations de mouvement déterminées étant représentatives de la position mesurée dudit terminal. A cet effet, le terminal 20 comporte un capteur de position (non représenté sur les figures), qui peut être de tout type adapté. Par exemple, le capteur de position est un capteur GPS (« Global Positioning System »), auquel cas les mesures de position correspondent aux coordonnées GPS dudit terminal, ou encore un module de communication WiFi, auquel cas les mesures de position correspondent à un identifiant d'une station de base WiFi, de position connue ou déterminable par le réseau d'accès 30, se trouvant à proximité dudit terminal, etc.

En outre, l'invention a été décrite en considérant de manière non limitative que les informations à émettre, déterminées par le terminal 20, correspondent à des informations de mouvement dudit terminal 20. Rien n'exclut cependant, suivant d'autres exemples, de considérer alternativement ou en complément d'autres types d'informations à inclure dans le message de notification. Suivant un exemple, l'étape 54 de détermination d'informations du terminal 20 peut comporter, lorsqu'un instant de fin (et/ou un instant de début) d'une phase de mobilité est détecté, une mesure de la température, les informations déterminées étant représentatives de la température mesurée par ledit terminal. Suivant un autre exemple, l'étape 54 de détermination d'informations du terminal 20 peut comporter, lorsqu'un instant de fin (et/ou un instant de début) d'une phase de mobilité est détecté, une mesure de la pression atmosphérique, les informations déterminées étant représentatives de la pression atmosphérique mesurée par ledit terminal. Suivant un autre exemple, l'étape 54 de détermination d'informations du terminal 20 peut comporter, lorsqu'un instant de fin (et/ou un instant de début) d'une phase de mobilité est détecté, une mesure de la luminosité, les informations déterminées étant représentatives de la luminosité mesurée par ledit terminal. Suivant un autre exemple, l'étape 54 de détermination d'informations du terminal 20 peut comporter, lorsqu'un instant de fin (et/ou un instant de début) d'une phase de mobilité est détecté, une mesure du champ magnétique, les informations déterminées étant représentatives du champ magnétique mesuré.

**Revendications**

1.  - Procédé (50) de notification, par un terminal (20), d'informations déterminées par ledit terminal à destination d'un réseau d'accès (30) d'un système (10) de communication sans fil, ledit terminal comportant un capteur (22) de mouvement adapté à fournir des mesures représentatives du mouvement dudit terminal, le procédé comporte :

    - une évaluation (51), en fonction des mesures fournies par le capteur (22) de mouvement, d'un critère prédéterminé de détection de mouvement et, lorsque le critère de détection de mouvement est vérifié : un horodatage (52) du mouvement détecté par mémorisation d'un instant de détection du mouvement détecté,
    - une détermination (53), en fonction des instants de détection, d'instants de début et d'instants de fin respectifs de phases de mobilité du terminal (20) en identifiant des instants de détection qui appartiennent à une même phase de mobilité et des instants de détection qui appartiennent à des phases de mobilité différentes,
    - une détermination (54) d'informations par le terminal (20) en fonction des instants de début et des instants de fin respectifs de phases de mobilité dudit terminal,
    - une formation (55) d'un message de notification comportant les informations déterminées,
    - une émission (56) du message de notification à destination du réseau d'accès (30).

2.  - Procédé (50) selon la revendication 1, dans lequel le capteur de mouvement (22) est par défaut en mode veille, et est configuré pour se réveiller de manière récurrente pour effectuer une mesure du mouvement du terminal et évaluer le critère de détection de mouvement en fonction de la mesure effectuée.

3.  - Procédé (50) selon l'une quelconque des revendications 1 à 2, dans lequel les informations correspondent aux instants de début et aux instants de fin respectifs de phases de mobilité du terminal.

4.  - Procédé (50) selon la revendication 3, dans lequel, au cours de la formation du message de notification, les instants de début et les instants de fin sont encodés sous la forme d'écarts temporels par rapport à un instant de référence, l'instant de référence n'étant pas inclus dans le message de notification.

5.  - Procédé (50) selon la revendication 4, dans lequel l'instant de référence est l'instant d'émission du message de notification.

6.  - Procédé (50) selon l'une quelconque des revendications 1 à 5, dans lequel la détermination d'informations par le terminal (20) comporte, lorsqu'un instant de fin et/ou un instant de début d'une phase de mobilité est détecté, une mesure par un autre capteur dudit terminal, distinct du capteur de mouvement, les informations déterminées étant représentatives de la mesure effectuée par ledit autre capteur dudit terminal.

7.  - Procédé (50) selon l'une quelconque des revendications 1 à 6, dans lequel la détermination d'instants de début et d'instants de fin respectifs de phases de mobilité comporte :

    - une mémorisation (534) dans une table d'historique de l'instant de détection de chaque mouvement détecté, ladite table d'historique comportant un nombre $n_{mem}$ prédéterminé d'instants de détection respectifs de mouvements précédemment détectés,
- lorsque le critère de détection de mouvement est vérifié de sorte qu'un nouveau mouvement est détecté : une évaluation (530) d'un critère prédéterminé de détection de nouvelle phase de mobilité par comparaison de l'instant de détection du nouveau mouvement détecté avec les instants de détection mémorisés dans la table d'historique,
- lorsque le critère de détection de nouvelle phase de mobilité est vérifié : une mémorisation (533) de l'instant de détection du nouveau mouvement détecté comme instant de début de la nouvelle phase de mobilité et de l'instant de détection le plus récent mémorisé dans la table d'historique comme instant de fin de la phase de mobilité précédente.

**8.** - Procédé (50) selon la revendication 7, dans lequel le critère de détection de nouvelle phase de mobilité est vérifié lorsque l'expression suivante est vérifiée :

$$td - \sum_{i=1}^{n_{mem}} a_i \cdot td_i > V0$$

expression dans laquelle :

- $td$ correspond à l'instant de détection du nouveau mouvement détecté,
- $td_i$ correspond à l'instant de détection de rang $i$ mémorisé dans la table d'historique,
- $\alpha_i$ correspond à un coefficient de pondération de l'instant de détection de rang $i$,
- $V0$ correspond à une valeur seuil prédéterminée.

**9.** - Procédé (50) selon l'une quelconque des revendications 1 à 8, dans lequel, les mesures fournies par le capteur (22) de mouvement étant représentatives d'accélérations $\alpha_x$, $\alpha_y$ et $\alpha_z$ du terminal (20) suivant trois axes, le critère de détection de mouvement est vérifié lorsque l'expression suivante est vérifiée :

$$N\{a_x, a_y, a_z\} > V1$$

expression dans laquelle :

- $N\{\alpha_x, \alpha_y, \alpha_z\}$ correspond à une norme d'un vecteur d'accélération formé par les accélérations $\alpha_x$, $\alpha_y$ et $\alpha_z$,
- $V1$ correspond à une valeur seuil prédéterminée.

**10.** - Procédé (50) selon l'une quelconque des revendications 1 à 9, dans lequel, les mesures fournies par le capteur (22) de mouvement étant représentatives d'accélérations $\alpha_x$, $\alpha_y$ et $\alpha_z$ du terminal (20) suivant trois axes, le critère de détection de mouvement est vérifié lorsque l'expression suivante est vérifiée :

$$N\{|\Delta a_x|, |\Delta a_y|, |\Delta a_z|\} > V2$$

expression dans laquelle :

- $|\Delta \alpha_x|$, $|\Delta \alpha_y|$ et $|\Delta \alpha_z|$ correspondent aux variations respectives des accélérations $\alpha_x$, $\alpha_y$ et $\alpha_z$,
- $N\{|\Delta \alpha_x|, |\Delta \alpha_y|, |\Delta \alpha_z|\}$ correspond à une norme d'un vecteur de variation d'accélération formé par les variations d'accélération $|\Delta \alpha_x|$, $|\Delta \alpha_y|$ et $|\Delta \alpha_z|$,
- $V2$ correspond à une valeur seuil prédéterminée.

**11.** - Produit programme d'ordinateur, il comporte un ensemble d'instructions de code de programme qui, lorsqu'elles sont exécutées par un processeur, configurent ledit processeur pour mettre en œuvre un procédé (50) de notification selon l'une quelconque des revendications 1 à 10.

**12.** - Terminal (20) comportant un capteur (22) de mouvement et un module (21) de communication sans fil adapté à échanger des données avec un réseau d'accès (30) d'un système (10) de communication sans fil, ledit terminal (20) comporte un circuit (23) de traitement configuré pour mettre en œuvre les étapes d'un procédé (50) de notification selon l'une quelconque des revendications 1 à 10.

**13.** - Système (10) de communication sans fil comportant un réseau d'accès (30), ledit système de communication sans fil comporte une pluralité de terminaux (20) selon la revendication 12.

**Patentansprüche**

**1.** Verfahren (50) zur Meldung durch ein Endgerät (20) von Informationen, die von dem Endgerät für ein Zugangsnetzwerk (30) eines drahtlosen Kommunikationssystems (10) bestimmt werden, wobei das Endgerät einen Bewegungssensor (22) beinhaltet, der angepasst ist, um repräsentative Messungen für die Bewegung des Endgerätes bereitzustellen, wobei das Verfahren beinhaltet:

- eine Bewertung (51) eines vorbestimmten Bewegungserkennungskriteriums in Abhängigkeit von den vom Bewegungssensor (22) bereitgestellten Messungen, und wenn das Bewegungserkennungskriterium überprüft ist: Eine Zeitstempelung (52) der erkannten Bewegung durch Speicherung eines Erkennungszeitpunkts der erkannten Bewegung,

- eine Bestimmung (53), in Abhängigkeit von den Erkennungszeitpunkten, von jeweiligen Anfangszeitpunkten und Endzeitpunkten von Beweglichkeitsphasen des Endgerätes (20) durch Identifizieren der Erkennungszeitpunkte, die einer selben Beweglichkeitsphase angehören, und von Erkennungszeitpunkten, die unterschiedlichen Beweglichkeitsphasen angehören,

- eine Bestimmung (54) von Informationen durch das Endgerät (20) in Abhängigkeit von den jeweiligen Anfangszeitpunkten und Endzeitpunkten von Beweglichkeitsphasen des Endgerätes,

- ein Bilden (55) einer Meldungsnachricht, die die bestimmten Informationen beinhaltet,

- ein Senden (56) der Meldungsnachricht zum Zugangsnetzwerk (30).

2. Verfahren (50) nach Anspruch 1, wobei der Bewegungssensor (22) standardgemäß im Standby-Modus ist, und konfiguriert ist, um in wiederkehrender Form aufzuwachen, um eine Messung der Bewegung des Endgerätes durchzuführen, und das Bewegungserkennungskriterium in Abhängigkeit von der durchgeführten Messung zu bewerten.

3. Verfahren (50) nach einem der Ansprüche 1 bis 2, wobei die Informationen jeweiligen Anfangszeitpunkten und Endzeitpunkten von Beweglichkeitsphasen des Endgerätes entsprechen.

4. Verfahren (50) nach Anspruch 3, wobei die Anfangszeitpunkte und Endzeitpunkte im Laufe der Bildung der Meldungsnachricht in Form von Zeitabständen in Bezug auf einen Referenzzeitpunkt codiert werden, wobei der Referenzzeitpunkt nicht in der Meldungsnachricht beinhaltet ist.

5. Verfahren (50) nach Anspruch 4, wobei der Referenzzeitpunkt der Sendezeitpunkt der Meldungsnachricht ist.

6. Verfahren (50) nach einem der Ansprüche 1 bis 5, wobei die Bestimmung von Informationen durch das Endgerät (20), wenn ein Endzeitpunkt und/oder Anfangszeitpunkt einer Beweglichkeitsphase erkannt wird, eine Messung durch einen anderen Sensor des Endgerätes, der sich von dem Bewegungssensor unterscheidet, beinhaltet, wobei die bestimmten Informationen repräsentativ für die von dem anderen Sensor des Endgerätes durchgeführte Messung sind.

7. Verfahren (50) nach einem der Ansprüche 1 bis 6, wobei die Bestimmung von jeweiligen Anfangszeitpunkten und Endzeitpunkten von Beweglichkeitsphasen beinhaltet:

- ein Speichern (534) in einer Historientabelle des Erkennungszeitpunkts einer jeden erkannten Bewegung, wobei die Historientabelle eine vorbestimmte Anzahl $n_{mem}$ von jeweiligen Erkennungszeitpunkten von zuvor erkannten Bewegungen beinhaltet,

- wenn das Bewegungserkennungskriterium derart überprüft ist, dass eine neue Bewegung erkannt wird: eine Bewertung (530) eines vorbestimmten Erkennungskriteriums einer neuen Beweglichkeitsphase durch Vergleichen des Erkennungszeitpunkts der erkannten neuen Bewegung mit den in der Historientabelle gespeicherten Erkennungszeitpunkten,

- wenn das Erkennungskriterium einer neuen Beweglichkeitsphase überprüft ist: eine Speicherung (533) des Erkennungszeitpunkts der erkannten neuen Bewegung als Anfangszeitpunkt der neuen Beweglichkeitsphase und des zuletzt in der Historientabelle als Endzeitpunkt der vorherigen Beweglichkeitsphase gespeicherten Erkennungszeitpunkts.

8. Verfahren (50) nach Anspruch 7, wobei das Erkennungskriterium der neuen Beweglichkeitsphase überprüft wird, wenn der folgende Ausdruck überprüft ist:

$$td - \sum_{i=1}^{n_{mem}} a_i \; \star \; td_i \; > \; VO$$

Ausdruck, bei dem:

- $td$ dem Erkennungszeitpunkt der erkannten neuen Bewegung entspricht,

- $td_i$ dem Erkennungszeitpunkt von Rang $i$ entspricht, der in der Historientabelle gespeichert ist,

- $\alpha_i$ einem Gewichtungskoeffizienten des Erkennungszeitpunkts von Rang $i$ entspricht,

- $VO$ einem vorbestimmten Schwellenwert entspricht.

9. Verfahren (50) nach einem der Ansprüche 1 bis 8, wobei die von dem Bewegungssensor (22) bereitgestellten Messungen repräsentativ für Beschleunigungen $\alpha_x$, $\alpha_y$ und $\alpha_z$ des Endgerätes (20) entlang dreier Achsen ist, wobei das Bewegungserkennungskriterium überprüft wird, wenn der folgende Ausdruck überprüft ist:

$$N \; \{\alpha_x, \; \alpha_y, \; \alpha_z\} \; > \; V1$$

Ausdruck, bei dem:

- $N \{\alpha_x, \; \alpha_y, \; \alpha_z\}$ einer Norm eines Beschleunigungsvektors entspricht, der durch die Be-

schleunigungen $\alpha_x$, $\alpha_y$ und $\alpha_z$ gebildet wird,
- *V1* einem vorbestimmten Schwellenwert entspricht.

10. Verfahren (50) nach einem der Ansprüche 1 bis 9, wobei, da die von dem Bewegungssensor (22) bereitgestellten Messungen repräsentativ für die Beschleunigungen $\alpha_x$, $\alpha_y$ und $\alpha_z$ des Endgerätes (20) entlang dreier Achsen sind, das Bewegungserkennungskriterium überprüft wird, wenn der folgende Ausdruck überprüft ist:

$$N \ \{|\Delta\alpha_x|, \ |\Delta\alpha_y|, \ |\Delta\alpha_z|\} \ > \ V2$$

Ausdruck, bei dem:

- $|\Delta\alpha_x|$, $|\Delta\alpha_y|$ und $|\Delta\alpha_z|$ jeweiligen Variationen der Beschleunigungen $\alpha_x$, $\alpha_y$ und $\alpha_z$ entsprechen,
- $N \{|\Delta\alpha_x|, |\Delta\alpha_y|, |\Delta\alpha_z|\}$ einer Norm eines Beschleunigungsvariationsvektors entspricht, der durch die Beschleunigungsvariationen $|\Delta\alpha_x|$, $|\Delta\alpha_y|$ und $|\Delta\alpha_z|$ gebildet wird,
- *V2* einem vorbestimmten Schwellenwert entspricht.

11. Computerprogrammprodukt, das eine Reihe von Programmcodeanweisungen beinhaltet, die, wenn sie von einem Prozessor ausgeführt werden, den Prozessor konfigurieren, um das Verfahren (50) zur Meldung nach einem der Ansprüche 1 bis 10 umzusetzen.

12. Endgerät (20), das einen Bewegungssensor (22) und ein drahtloses Kommunikationsmodul (21) beinhaltet, das angepasst ist, um Daten mit einem Zugangsnetzwerk (30) eines drahtlosen Kommunikationssystems (10) auszutauschen, wobei das Endgerät (20) eine Verarbeitungsschaltung (23) beinhaltet, die konfiguriert ist, um die Schritte des Verfahrens (50) zur Meldung nach einem der Ansprüche 1 bis 10 umzusetzen.

13. Drahtloses Kommunikationssystem (10), das ein Zugangsnetzwerk (30) beinhaltet, wobei das drahtlose Kommunikationssystem eine Vielzahl von Endgeräten (20) nach Anspruch 12 beinhaltet.

**Claims**

1. - Method (50) for notifying, by a terminal (20), information determined by said terminal, to an access network (30) of a wireless communication system (10), said terminal comprising a motion sensor (22) adapted to provide measurements representative of the movement of said terminal, the method comprises:

- assessing (51), as a function of the measurements provided by the motion sensor (22), a predetermined movement detection criterion and, when the movement detection criterion is satisfied: time stamping (52) the movement detected by storing a detection time at which the movement was detected,
- determining (53), as a function of the detection times, respective start times and end times of mobility phases of the terminal (20) by identifying detection times that belong to the same mobility phase and detection times that belong to different mobility phases,
- determining (54) information by the terminal (20) as a function of the respective start times and end times of mobility phases of said terminal,
- forming (55) a notification message comprising the determined information,
- transmitting (56) the notification message to the access network (30).

2. - Method (50) according to claim 1, wherein the motion sensor (22) is, by default, in standby mode, and is configured such that it wakes up recurrently in order to measure the movement of the terminal and assess the movement detection criterion as a function of the measurement carried out.

3. - Method (50) according to any one of claims 1 to 2, wherein the information corresponds to the respective start times and end times of mobility phases of the terminal.

4. - Method (50) according to claim 3, wherein, when the notification message is being formed, the start times and the end times are encoded in the form of time differences relative to a reference time, the reference time not being included in the notification message.

5. - Method (50) according to claim 4, wherein the reference time is the transmission time of the notification message.

6. - Method (50) according to any one of claims 1 to 5, wherein the determination of information by the terminal (20) comprises, when an end time and/or a start time of a mobility phase is detected, a measurement by another sensor of said terminal, which is separate from the motion sensor, the information determined being representative of the measurement carried out by said other sensor of said terminal.

7. - Method (50) according to any one of claims 1 to 6, wherein the determination of respective start times and end times of mobility phases comprises:

- storing (534), in a record table, the detection time for each movement detected, said record table comprising a predetermined number $n_{mem}$ of respective detection times of previously detected movements,
- when the movement detection criterion is satisfied such that a new movement is detected: assessing (530) a predetermined detection criterion for a new mobility phase by comparing the detection time of the new movement detected with the detection times stored in the record table,
- when the detection criterion for a new mobility phase is satisfied: storing (533) the detection time of the new movement detected as a start time of the new mobility phase and the most recent detection time stored in the record table as an end time of the previous mobility phase.

8. - Method (50) according to claim 7, wherein the detection criterion for a new mobility phase is satisfied when the following expression is satisfied:

$$td - \sum_{i=1}^{n_{mem}} a_i \cdot td_i > V0$$

in which expression:

- $td$ corresponds to the detection time of the new movement detected,
- $td_i$ corresponds to the detection time of rank $i$ stored in the record table,
- $\alpha_i$ corresponds to a weighting coefficient of the detection time of rank $i$,
- $V0$ corresponds to a predetermined threshold value.

9. - Method (50) according to any one of claims 1 to 8, wherein, since the measurements provided by the motion sensor (22) are representative of accelerations $\alpha_x$, $\alpha_y$ and $\alpha_z$ of the terminal (20) along three axes, the movement detection criterion is satisfied when the following expression is satisfied:

$$N\{a_x, a_y, a_z\} > V1$$

in which expression:

- $N\{\alpha_x, \alpha_y, \alpha_z\}$ corresponds to a norm of an acceleration vector formed by the accelerations $\alpha_x$, $\alpha_y$ and $\alpha_z$,
- $V1$ corresponds to a predetermined threshold value.

10. - Method (50) according to any one of claims 1 to 9, wherein, since the measurements provided by the motion sensor (22) are representative of accelerations $\alpha_x$, $\alpha_y$ and $\alpha_z$ of the terminal (20) along three axes, the movement detection criterion is satisfied when the following expression is satisfied:

$$N\{|\Delta a_x|, |\Delta a_y|, |\Delta a_z|\} > V2$$

in which expression:

- $|\Delta\alpha_x|$, $|\Delta\alpha_y|$ and $|\Delta\alpha_z|$ correspond to the respective variations of the accelerations $\alpha_x$, $\alpha_y$ and $\alpha_z$,
- $N\{|\Delta\alpha_x|, |\Delta\alpha_y|, |\Delta\alpha_z|\}$ corresponds to a norm of an acceleration variation vector formed by the acceleration variations $|\Delta\alpha_x|$, $|\Delta\alpha_y|$ and $|\Delta\alpha_z|$,
- $V2$ corresponds to a predetermined threshold value.

11. - Computer program product comprising a set of program code instructions which, when executed by a processor, configure said processor to implement a notification method (50) according to any one of claims 1 to 10.

12. - Terminal (20) comprising a motion sensor (22) and a wireless communication module (21) adapted to exchanging data with an access network (30) of a wireless communication system (10), said terminal (20) comprises a processing circuit (23) configured such that it implements the steps of a method (50) for notifying according to any one of claims 1 to 10.

13. - Wireless communication system (10) comprising an access network (30), said wireless communication system comprises a plurality of terminals (20) according to claim 12.

**Fig. 1**

**Fig. 2**

510

- 51 -

511

- 52 -

- 53 -

- 54 -

- 55 -

- 56 -

50

**Fig. 3**

511

531

- 530 -

53

532

- 533 -

- 534 -

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2016105764 A1

**Littérature non-brevet citée dans la description**

• **HIGUCHI TAKAMASA et al.** Mobile Node Localization Focusing on Stop-and-Go Behavior of Indoor Pedestrians. *IEEE TRANSACTIONS ON MOBILE COMPUTING,LOS ALAMITOS,* 01 Juillet 2014, vol. 13 (7), 1564-1578